# EUROPÄISCHE PATENTANMELDUNG

(11) **EP 1 855 017 A2**
(43) Veröffentlichungstag der Anmeldung: **14.11.2007**
(21) Anmeldenummer: 07008834.9
(22) Anmeldetag: 02.05.2007
(51) Int. Cl.: F16B 35/06, E04F 19/04

(54) **Befestigungsvorrichtung**

(30) Priorität: 08.05.2006 ZA 200603735
(71) Anmelder: Döllken-Weimer GmbH Profile für den Fachmann, 99428 Nohra/Weimar (DE); National Converting Agencies(PTY)Ltd., 19 Suffert Street Pinetown 3610 (ZA)
(72) Erfinder: Millar, Barry John, Pinetown, 3610 (ZA)
(74) Vertreter: von dem Borne, Andreas

(57) **Zusammenfassung**

Die Erfindung betrifft eine Befestigungsvorrichtung für die Befestigung einer Leiste, insbesondere Sockelleiste, Wandanschlussleiste, Deckenanschlussleiste oder dergleichen Abschlussleiste, an einer Wand, wobei die Befestigungsvorrichtung als bereichsweise in die Wand eintreibbares Leistenbefestigungselement ausgebildet ist, welches zumindest einen in die Wand eintreibbaren Wandanschlussstift sowie zumindest einen an den Wandanschlussstift angeschlossenen Leistenbefestigungsstift aufweist, auf welchen die Leiste aufsteckbar ist, wobei an den Wandanschlussstift oder im Übergangsbereich zwischen dem Wandanschlussstift und dem Leistenbefestigungsstift ein eine Montagefläche aufweisender Montagevorsprung angeordnet ist, auf welchen ein Werkzeug im Zuge des Eintreibens des Leistenbefestigungselementes in die Wand arbeitet.

## Beschreibung

Die Erfindung betrifft eine Befestigungsvorrichtung für die Befestigung einer Leiste, insbesondere Sockelleiste, Wandanschlussleiste, Deckenanschlussleiste oder dergleichen Abschlussleiste, an einer Wand. - Bei der Leiste, zum Beispiel Sockelleiste, kann es sich insbesondere um eine Kernsockelleiste handeln, die einen Leistenkern aus zum Beispiel einem Holzwerkstoff sowie eine Kunststoffummantelung aufweist und an der Leistenunterseite mit einem Bodenabschlussprofil und/oder an der Leistenoberseite mit einem Wandabschlussprofil aus weichelastischem Material versehen ist. Derartige Leisten in der Ausführungsform als Kemsockelleisten sind beispielsweise in der EP 1114 901 A2 beschrieben. Die Erfindung betrifft jedoch auch die Befestigung anderer Leistentypen, zum Beispiel die Befestigung von Holzleisten oder Kunststoffleisten. Wand meint im Rahmen der Erfindung zum Beispiel eine Gebäudewand. Im Bereich einer solchen Gebäudewand werden beispielsweise Sockelleisten am Übergang zwischen Wand und Boden an der Wand befestigt. Die Erfindung umfasst jedoch auch die Befestigung von Wandanschlussleisten, zum Beispiel im Übergangsbereich zwischen einer Arbeitsplatte und einer Wand, wobei auch eine solche Wandanschlussleiste üblicherweise an der Wand befestigt wird. Ferner umfasst die Erfindung aber auch die Befestigung von Deckenanschlussleisten, wobei eine solche Deckenanschlussleiste dann an einer Wand oder auch einer Decke befestigt werden kann.

Aus der Praxis ist es bekannt, derartige Leisten und insbesondere Kernsockelleisten, im Wege des Klebens und/oder Nagelns an einer Wand zu befestigen. Derartige Befestigungstechniken haben sich in der Praxis grundsätzlich bewährt, sie sind jedoch weiterentwicklungsfähig. Hier setzt die Erfindung ein.

Der Erfindung liegt die Aufgabe zugrunde, eine Befestigungsvorrichtung für die Befestigung einer Leiste an einer Wand zu schaffen, welche in montagetechnisch einfacher und zugleich kostengünstiger Weise eine (optisch) einwandfreie und zuverlässige Verbindung der Leiste an der Wand gewährleistet.

Zur Lösung dieser Aufgabe lehrt die Erfindung eine Befestigungsvorrichtung für die Befestigung einer Leiste an einer Wand, wobei die Befestigungsvorrichtung als bereichsweise in die Wand eintreibbares (stiftartiges) Leistenbefestigungselement ausgebildet ist, welches zumindest einen in die Wand eintreibbaren Wandanschlussstift sowie zumindest einen an den Wandanschlussstift angeschlossenen Leistenbefestigungsstift aufweist, auf welchen die Leiste aufsteckbar ist (bzw. welcher in die Leiste einsteckbar ist), wobei an den Wandanschlussstift oder im Übergangsbereich zwischen dem Wandanschlussstift und dem Leistenbefestigungsstift ein eine Montagefläche aufweisender Montagevorsprung angeordnet ist, auf welchen ein Werkzeug im Zuge des Eintreibens des Leistenbefestigungselementes in die Wand arbeitet. Der Montagevorsprung kann dabei vorzugsweise als umlaufender Montageflansch mit zum Beispiel einer kreisförmigen bzw. kreisringförmigen Montagefläche ausgebildet sein.

Dabei geht die Erfindung von der Erkenntnis aus, dass eine Leiste auf einfache und dauerhafte Weise ohne die Gefahr von Beschädigungen der Leiste an zum Beispiel einer Wand befestigt werden kann, wenn im Zuge der Montage zunächst einmal (mehrere) stiftartige Leistenbefestigungselemente in die Wand eingetrieben werden und wenn anschließend nach Montage eine Vielzahl derartiger Leistenbefestigungselemente die Leiste an diesen Leistenbefestigungselementen befestigt wird. Dazu weist das erfindungsgemäße Leistenbefestigungselement einerseits den der Wand zugeordneten Wandanschlussstift und andererseits den der Leiste zugeordneten Leistenbefestigungsstift auf. Ferner ist der beschriebene Montagevorsprung vorgesehen, welcher es auf einfacher Weise ermöglicht, das Leistenbefestigungselement in die Wand einzutreiben,

Der Durchmesser des Montageflansches ist zur Begrenzung der Einstecktiefe in die Wand vorzugsweise größer als der Durchmesser des Wandanschlussstiftes. Ferner ist es zweckmäßig, wenn der Durchmesser des Leistenbefestigungsstiftes kleiner als der Durchmesser des Montageflansches ist, sodass mit einem Werkzeug gegen den Montageflansch gearbeitet werden kann. Besonders bevorzugt sind Ausführungsformen, bei denen der Durchmesser des Leistenbefestigungsstiftes darüber hinaus auch kleiner als der Durchmesser des Wandanschlussstiftes ist.

Das erfindungsgemäße Leistenbefestigungselement wird folglich mit einem geeigneten Werkzeug im Sinne einer Vormontage in die Wand eingetrieben, wobei das Werkzeug auf die Montagefläche dieses Montageflansches arbeitet. Zugleich begrenzt die bevorzugte Ausgestaltung des Montageflansches die Einstecktiefe des Leistenbefestigungselementes in die Wand. Nach erfolgter Montage des Leistenbefestigungselementes kragt dann (ausschließlich) noch der verhältnismäßig dünne Leistenbefestigungsstift aus der Wand vor, der in seiner Ausgestaltung gleichsam einen aus der Wand vorkragenden Stahlstift bilden kann. Üblicherweise werden im Bereich der zu verlegenden Leiste eine Vielzahl derartiger Leistenbefestigungselemente in die Wand eingetrieben, und zwar mit gewünschtem Abstand zueinander. Anschließend kann dann die (zugeschnittene) Leiste auf einfache Weise gegen die derart vorbereitete Wand gedrückt werden, sodass die aus der Wand vorkragenden Leistenbefestigungsstifte rückseitig in die Leiste eindringen und folglich die Leiste gleichsam auf die vorkragenden Leistenbefestigungsstifte aufgesteckt wird. Auch wenn auf diese Weise eine zuverlässige und dauerhafte Befestigung im Wege des Aufsteckens der Leiste auf die Stifte gewährleistet ist, kann es zweckmäßig sein, zusätzlich eine Klebstoffverbindung vorzusehen, die (bereichsweise) auf die Rückseite der Leiste und/oder (bereichsweise) auf die Wand aufgebracht werden kann.

Dabei ist es zweckmäßig, wenn die Länge des vorkragenden Leistenbefestigungsstiftes an die Dicke der Leiste bzw. an die Dicke des Leistenkerns angepasst ist. Der Leistenbefestigungsstift sollte folglich (etwas) kürzer sein als die Dicke der Leiste, damit eine Beschädigung der Leistenvorderseite ausgeschlossen wird.

Im Zuge der Montage kann es im Übrigen zweckmäßig sein, das erfindungsgemäße Leistenbefestigungselement mit dem Wandanschlussabschnitt nicht unmittelbar in die Wand einzutreiben, sondern zunächst ein entsprechend dimensioniertes Loch (zum Beispiel Bohrloch) in die Wand einzubringen und anschließend gegebenenfalls einen Dübel in das Loch einzusetzen, sodass das erfindungsgemäße Leistenbefestigungselement mit seinem Wandanschlussabschnitt dann in das vorbereitete Bohrloch bzw, in den in das Bohrloch eingesteckten Dübel eingetrieben wird. Die Montage des Leistenbefestigungselementes erfolgt vorzugsweise mit einem geeigneten Werkzeug, welches gleichsam als Stempel ausgebildet sein kann und eine stirnseitige Betätigungsfläche aufweist, welche im Zuge der Montage auf die Montagefläche des Montageflansches arbeitet. Um zu gewährleisten, dass der gleichsam aus der Montagefläche vorkragende Leistenbefestigungsstift dabei nicht stört, ist es zweckmäßig, wenn das Werkzeug (zum Beispiel der Stempel) im Bereich der Betätigungsfläche eine (zum Beispiel zentrale) Ausnehmung aufweist, welche eine Aufnahme für den vorkragenden Leistenbefestigungsstift bildet, sodass das Werkzeug, zum Beispiel in der Ausführungsform als Stempel auf das Leistenbefestigungselement aufsteckbar ist, wobei der Leistenbefestigungsstift dann in dieser Ausnehmung eingreift. Auf die der Betätigungsfläche gegenüberliegenden Seite des Werkzeuges bzw. Stempels kann dann mit zum Beispiel einem Hammer oder dergleichen Werkzeug auf den Stempel gearbeitet bzw. geschlagen werden. Die Tiefe der Ausnehmung in dem Werkzeug und ihr Durchmesser ist vorzugsweise größer als die Länge und der Durchmesser des Leistenbefestigungsstiftes.

Nach einem weiteren Vorschlag der Erfindung ist der Montageflansch als sich in Richtung des Wandanschlussstiftes verjüngender, zum Beispiel konisch verjüngender Montageflansch ausgebildet, sodass ein einwandfreier bündiger Abschluss mit der Wandoberfläche gewährleistet ist, und anschließend auch die Leiste einwandfrei an der Wand anliegen kann.

Ferner ist es zweckmäßig, wenn der Wandanschlussstift außenumfangsseitig zumindest bereichsweise eine Profilierung aufweist, die zum Beispiel gewindeartig und/oder widerhakenartig ausgebildet sein kann und eine einwandfreie Fixierung des Leistenbefestigungselementes an der Wand bzw. an dem Dübel gewährleistet. Eine derartige Profilierung ist üblicherweise so ausgebildet, dass das Leistenbefestigungselement auf "schlagende" Weise in die Wand bzw. in Dübel eingetrieben bzw. eingesteckt wird. Die Erfindung umfasst jedoch auch Ausführungsformen, bei welchen das Leistenbefestigungselement im Sinne einer Schraubenbewegung drehend in die Wand bzw. in den Dübel eingebracht wird. In diesem Fall empfiehlt sich dann die Verwendung eines geeigneten Schraubenwerkzeuges.

Ferner ist es zweckmäßig, wenn der Leistenbefestigungsstift außenumfangsseitig zumindest bereichsweise eine Profilierung aufweist, welche eine einwandfreie Befestigung der Leiste auf dem Leistenbefestigungsstift gewährleistet. Auch diese kann gewindeartig und/oder widerhakenartig ausgebildet sein.

Nach bevorzugter Ausführungsform ist das Leistenbefestigungselement, welches im Wesentlichen aus Wandanschlussstift, Leistenbefestigungsstift und Montageflansch besteht, einstückig gefertigt. Einstückig gefertigt meint dabei insbesondere einstückig aus einem einheitlichen Werkstoff, zum Beispiel einheitlich aus Metall oder einheitlich aus Kunststoff gefertigt. Ferner meint einstückig aber auch eine Ausgestaltung aus mehreren Werkstoffen. So kann es zweckmäßig sein, wenn lediglich der in die Leiste eingetriebene Leistenbefestigungsstift aus Metall, zum Beispiel aus Stahl ausgebildet ist, welcher dann (einstückig) in einem Wandanschlusssfift und/oder einen Montageflansch aus zum Beispiel Kunststoff eingeformt ist.

Gegenstand der Erfindung ist neben dem beschriebenen Leistenbefestigungselement auch ein Verfahren zum Befestigen einer Leiste, insbesondere Wandanschlussleiste oder dergleichen an einer Wand mittels einer oder mehrerer Befestigungsvorrichtungen bzw. Befestigungselementen der beschriebenen Art, Je nach Beschaffenheit und Material kann es zweckmäßig sein, auf die beschriebene Einbringung von Löchern und den Einsatz von Dübeln zu verzichten und die Befestigungselemente direkt in die Wand einzutreiben, zum Beispiel im Wege des Nagelns, Steckens oder Schraubens.

Schließlich ist Gegenstand der Erfindung auch ein Montageset für die Befestigung von Leisten nach einem Verfahren der beschriebenen Art, wobei ein solcher Montageset üblicherweise aus zumindest einer Leiste, mehreren Leistenbefestigungselementen sowie gegebenenfalls mehreren Dübeln besteht. Außerdem kann ein solcher Montageset darüber hinaus ein oder mehrere Befestigungswerkzeuge der beschriebenen Art enthalten.

Im Folgenden wird die Erfindung anhand einer lediglich ein Ausführungsbeispiel darstellenden Zeichnung näher erläutert. Es zeigen:
- Fig. 1: einen Übergang Boden/Wand im Querschnitt,
- Fig.2: ein erfindungsgemäßes Befestigungselement während der Montage an einer Wand gemäß Fig. 1,
- Fig. 3: das erfindungsgemäße Befestigungselement in einem montierten Zustand mit einer Sockelleiste und
- Fig. 4: den Gegenstand nach Fig. 3 mit montierter Sockelleiste.

In den Figuren ist in unterschiedlichen Montageabschnitten eine Befestigungsvorrichtung für die Befestigung einer Leiste 1 an einer Wand 2 dargestellt. Die Leiste 1 ist im Ausführungsbeispiel als Sockelleiste, und zwar als Kernsockelleiste ausgebildet. Eine solche Kernsockelleiste 1 weist einen Leistenkern 3 aus zum Beispiel einem Holzwerkstoff sowie eine Kunststoffummantelung 4 auf. An der Leistenoberseite ist ein Wandabschlussprofil 5 und an der Leistenunterseite ein Bodenabschlussprofil 6 vorgesehen, wobei das Bodenabschlussprofil 6 und das Wandabschlussprofil 5 jeweils aus zum Beispiel einem weichelastischen Material bestehen. Derartige Kemsockelleisten 1 sind beispielsweise in der EP 1 114 901 A2 beschrieben.

Die erfindungsgemäße Befestigungsvorrichtung, die insbesondere in den Fig. 2 und 3 dargestellt ist, ist als bereichsweise in die Wand eintreibbares (lineares) Leistenbefestigungselement 7 ausgebildet.

Dieses Leistenbefestigungselement 7 weist einen in die Wand 2 eintreibbaren Wandanschlussstift 7a sowie einen an den Wandanschlussstift 7a angeschlossenen Leistenbefestigungsstift 7c auf, wobei auf diesen Leistenbefestigungsstift 7c die Sockelleiste 1 aufsteckbar ist. Im Übergangsbereich zwischen Wandanschlussstift 7a und Leistenbefestigungsstift 7c ist ein Montagevorsprung 7b vorgesehen, welcher eine Montagefläche 8 aufweist, wobei ein geeignetes Werkzeug 14 im Zuge des Eintreibens des Leistenbefestigungselementes 7 in die Wand auf diese Montagefläche 8 des Montagevorsprunges 7b arbeitet,

Der Montagevorsprung 7b ist im Ausführungsbeispiel als umlaufender Montageflansch 7b mit einer kreisringförmigen Montagefläche 8 ausgebildet. Der Durchmesser Db des Montageflansches 7b ist zum Zwecke der Begrenzung der Einstecktiefe in die Wand 2 größer als der Durchmesser Da des Wandanschlussstiftes 7a. Der Durchmesser Dc des Leistenbefestigungsstiftes 7c ist nicht nur kleiner als der Durchmesser Db des Montageflansches 7b, sondern darüber hinaus auch kleiner als der Durchmesser Da des Wandanschlussstiftes 7a. Im Übrigen ist in den Figuren erkennbar, dass der Wandanschlussstift 7a, der Montageflansch 7b und der Leistenbefestigungsstift 7c "koaxial" angeordnet sind und folglich eine einheitliche zentrale Längsachse 9 besitzen.

Der Montageflansch 7b ist dabei als sich in Richtung zum Wandanschlussstift 7a verjüngender, nämlich konisch verjüngender Montageflansch ausgebildet. Ferner ist in den Figuren angedeutet, dass der Wandanschlussstift 7a außenumfangsseitig zumindest bereichsweise mit einer Profilierung 10 versehen ist, Der Leistenbefestigungsstift 7c ist ebenfalls außenumfangsseitig zumindest bereichsweise mit einer Profilierung 11 versehen. Das in den Figuren dargestellte Leistenbefestigungselement 7 ist im Ausführungsbeispiel einstückig aus Metall gefertigt.

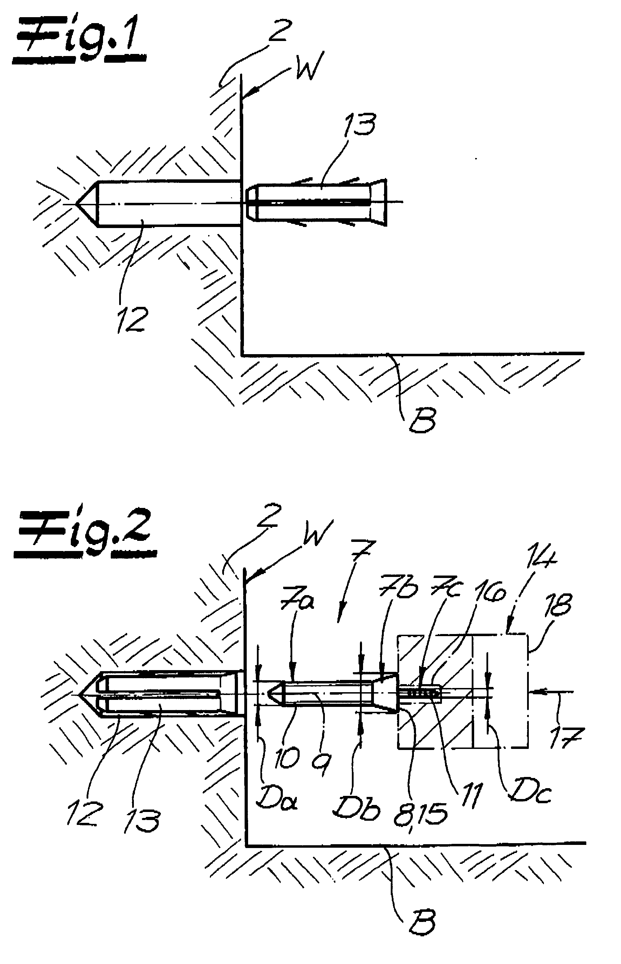

Das erfindungsgemäße Montageverfahren zur Befestigung einer Leiste 1 an einer Wand 2 bzw. an einem Übergang zwischen Wand 1 und Boden oder Platte B soll im Folgenden anhand der Fig. 1 bis 4 beschrieben werden:
In einem ersten Verfahrensschritt werden zunächst gemäß Fig. 1 geeignete Löcher 12 zum Beispiel mittels eines Bohrers in die Wand eingebracht. Entlang der Leistenlängsrichtung werden in geeigneten Abständen eine Vielzahl derartiger Bohrungen 12 eingebracht. Im Ausführungsbeispiel handelt es sich um Bohrungen mit einer Tiefe von 35 mm und einem Durchmesser von 7 mm, wobei der (mittlere) Abstand der Bohrung 12 von dem Boden B etwa 35 mm betragen kann. In diese vorbereiteten Bohrungen 12 werden dann in einem zweiten Verfahrensschritt, der ebenfalls in Fig. 1 dargestellt ist, geeignete Dübel 13 in die vorbereiteten Bohrungen 12 eingesteckt, und zwar derart, dass die Dübel 13 vollständig von den Löchern 12 aufgenommen werden und folglich nicht aus der Wandoberfläche W vorkragen.
In einem dritten Verfahrensschritt werden nun die erfindungsgemäßen Leistenbefestigungselemente 7 in die Wand 1 bzw. in die Bohrlöcher 12 zuvor eingesteckten Dübel 13 eingetrieben. Dazu wird auf Fig. 2 und 3 verwiesen. Zum Eintreiben der Befestigungselemente 7 wird das in Fig. 2 ebenfalls dargestellte Werkzeug 14 verwendet, welches eine dem Befestigungselement 7 zugeordnete Betätigungsfläche 15 aufweist, die im Zuge des Eintreibens gegen die Montagefläche 8 des Befestigungselementes 7 arbeitet. Stimseitig ist nun in das Werkzeug 14 bzw. in dessen Betätigungsfläche 15 eine Ausnehmung 16 bzw. ein Loch eingebracht, welches im Zuge des Eintreibens den aus dem Flansch 7b vorkragenden nagelartigen Leistenbefestigungsstift 7c aufnimmt, sodass gewährleistet ist, dass im Zuge des Eintreibens der Leistenbefestigungsstift 7c nicht beschädigt wird und insbesondere nicht verbogen wird. Das Eintreiben kann dann zum Beispiel mittels eines in Fig. 2 angedeuteten Hammers 17 oder dergleichen erfolgen, welcher auf eine der Betätigungsfläche 15 gegenüberliegende Arbeitsfläche 18 des Werkzeuges 14 arbeitet. Das Leistenbefestigungselement 7 wird dabei so weit in die Wand 1 eingetrieben, dass der Montageflansch 7b bzw, dessen frontseitige Montagefläche 8 bündig mit der Wandoberfläche W abschließt.

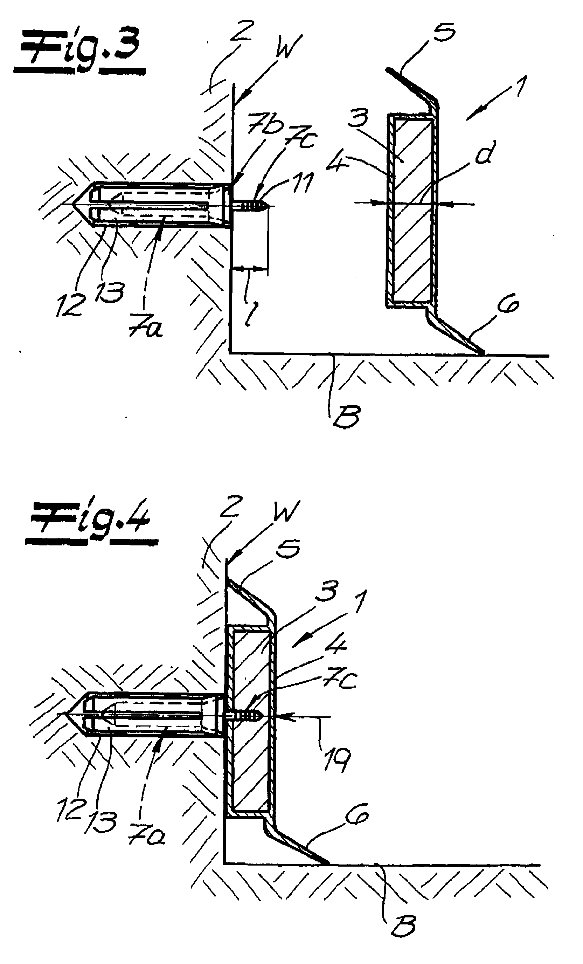

Dieser montierte Zustand des Leistenbefestigungselementes 7 ist in Fig. 3 dargestellt. Dabei kragen nun die Leistenbefestigungsstifte 7c gleichsam aus der Wandoberfläche W vor. In einem vierten Montageschritt wird nun gemäß Fig. 3 und 4 die Leiste 1 in Position gebracht und dann auf die vorkragenden nagelartigen Leistenbefestigungsstifte 7c aufgesteckt und dabei gegen die Wandoberfläche W gedrückt. Dieses kann mit einem geeigneten Werkzeug, zum Beispiel einem Gummihammer 19 oder dergleichen erfolgen, wobei die vorkragenden Leistenbefestigungsstifte 7c derart dimensioniert bzw. ausgestaltet sind, dass sich die Leiste mit verhältnismäßig geringen Kräften auf die Stifte 7c aufdrücken lässt, sodass Beschädigungen der frontseitigen Sichtflächen vermieden werden. Es ist in Fig. 3 erkennbar, dass die Länge 1 der vorkragenden Leistenbefestigungsstifte 7c etwas geringer als die Dicke d der Leiste 1 ist. Im Übrigen ist die Länge 1 des Leistenbefestigungsstiftes 7c üblicherweise geringer als die Länge des Wandanschlussstiftes 7a.

## Patentansprüche

1. Befestigungsvortichtung für die Befestigung einer Leiste (1), insbesondere Sockelleiste, Wandanschlussleiste, Deckenanschlussleiste oder dergleichen Abschlussleiste, an einer Wand (2),
wobei die Befestigungsvorrichtung als bereichsweise in die Wand (2) eintreibbares Leistenbefestigungselement (7) ausgebildet ist,
welches zumindest einen in die Wand (2) eintreibbaren Wandanschlussstift (7a) sowie zumindest einen an den Wandanschlussstift (7a) angeschlossenen Leistenbefestigungsstift (7c) aufweist, auf welchen die Leiste (1) aufsteckbar ist,
wobei an den Wandanschlussstift (7a) oder im Übergangsbereich zwischen dem Wandanschlussstift (7a) und dem Leistenbefestigungsstift (7c) ein eine Montagefläche (8) aufweisender Montagevorsprung (7b) angeordnet ist, auf welchen ein Werkzeug (14) im Zuge des Eintreibens des Leistenbefestigungselementes (7) in die Wand (2) arbeitet.

2. Vorrichtung nach Anspruch 1, **dadurch gekennzeichnet, dass** der Montagevorsprung als umlaufender Montageflansch (7b) mit zumindest kreisförmiger bzw. kreisringförmiger Montagefläche (8) ausgebildet ist.

3. Vorrichtung nach Anspruch 1 oder 2, **dadurch gekennzeichnet, dass** der Durchmesser (Db) des Montageflansches (7b) zur Begrenzung der Einstecktiefe in die Wand (2) größer ist als der Durchmesser (Da) des Wandanschlussstiftes (7a).

4. Vorrichtung nach einem der Ansprüche 1 bis 3, **dadurch gekennzeichnet, dass** der Durchmesser (Dc) des Leistenbefestigungsstiftes (7c) kleiner als der Durchmesser (Db) des Montageflansches (7b) ist.

5. Vorrichtung nach einem der Ansprüche 1 bis 4, **dadurch gekennzeichnet, dass** der Durchmesser (Dc) des Leistenbefestigungsstiftes (7c) kleiner als der Durchmesser (Da) des Wandanschlussstiftes (Da) ist.

6. Vorrichtung nach einem der Ansprüche 1 bis 5, **dadurch gekennzeichnet, dass** der Montageflansch (7b) sich in Richtung zum Wandanschlussstift verjüngend, zum Beispiel konisch verjüngend, ausgebildet ist.

7. Vorrichtung nach einem der Ansprüche 1 bis 6, **dadurch gekennzeichnet, dass** der Wandanschlussstift (7a) außenumfangsseitig zumindest bereichsweise eine Profilierung (10) aufweist.

8. Vorrichtung nach einem der Ansprüche 1 bis 7, **dadurch gekennzeichnet, dass** der Leistenbefestigungsstift (7c) außenumfangsseitig zumindest bereichsweise eine Profilierung (11) aufweist.

9. Vorrichtung nach einem der Ansprüche 1 bis 8, **dadurch gekennzeichnet, dass** das Leistenbefestigungselement (7) einstückig, zum Beispiel aus Metall und/oder Kunststoff, gefertigt ist.

10. Verfahren zum Befestigen einer Leiste (1) an einer Wand (2) mittels mehrerer Befestigungsvorrichtungen nach einem der Ansprüche 1 bis 9, wonach mehrere Leistenbefestigungselemente (7) mit ihren Wandanschlussstiften (7a) beabstandet zueinander in die Wand (2) eingetrieben werden, sodass die Leistenbefestigungsstifte (7c) aus der Wand (2) vorkragen und wonach anschließend die Leiste (1) auf die Leistenbefestigungsstifte (7c) aufgesteckt wird, sodass die Leistenbefestigungsstifte (7c) in die der Wand (2) zugeordnete Leistenrückseite eingreifen.

11. Verfahren nach Anspruch 10, **dadurch gekennzeichnet, dass** zunächst mehrere Löcher (12) mit Abstand zueinander in die Wand (2) eingebracht werden und dass anschließend gegebenenfalls in die Löcher (12) Befestigungsdübel (13) eingebracht werden und dass danach die Leistenbefestigungselemente (7) mit ihren Wandanschlussstiften (7a) in die Löcher bzw. in die Dübel eingetrieben werden.

12. Verfahren nach Anspruch 11, wonach die Leistenbefestigungselemente (7) mittels eines Werkzeuges (14) in die Wand (2) bzw, in ein Bohrloch (12) oder einen Befestigungsdübel (13) eingebracht werden, welches Werkzeug (14) mit einer Betätigungsfläche (15) auf die Montagefläche (8) des Montagevorsprungs (7b) arbeitet, wobei das Werkzeug (14) im Bereich der Betätigungsfläche (15) eine Ausnehmung (16) aufweist, in welche der Leistenbefestigungsstift (7c) im Zuge der Montage eingreift.

13. Montageset für die Befestigung von Leisten (1) an einer Wand (2) mittels eines Verfahrens nach einem der Ansprüche 1 bis 12, mit
- zumindest einer Leiste (1), insbesondere Kemsockelleiste, und
- mehreren Leistenbefestigungselementen (7).

14. Montageset nach Anspruch 13 mit mehreren Dübeln (13).

15. Montageset nach Anspruch 13 oder 14 mit zumindest einem Werkzeug (14) für das Eintreiben des Leistenbefestigungselementes (7) in die Wand (2).
